# EUROPEAN PATENT SPECIFICATION

(11) **EP 2 288 999 B1**
(45) Date of publication and mention of the grant of the patent: **30.08.2017**
(21) Application number: 09739388.8
(22) Date of filing: 03.04.2009
(51) Int. Cl.: G06F 15/16, G06F 9/44, G06F 3/00, G06F 17/00, G06F 17/30

(54) **HIGH-FIDELITY RENDERING OF DOCUMENTS IN VIEWER CLIENTS**
ORIGINALGETREUE DARSTELLUNG VON DOKUMENTEN BEI VIEWER-CLIENTS
RENDU HAUTE FIDÉLITÉ DE DOCUMENTS DANS DES CLIENTS DE VISUALISATION

(30) Priority: 30.04.2008 US 111988
(43) Date of publication of application: 02.03.2011
(73) Proprietor: Microsoft Technology Licensing, LLC, Redmond, WA 98052 (US)
(72) Inventor: KAPOOR, Sugandha, Sudeshkumar, Redmond, WA 98052-6399 (US); ZHU, Zhenjun, Redmond, WA 98052-6399 (US); GOTTWEIS, Juraj, Redmond, WA 98052-6399 (US); ABDO, Ralph, deceased (US)
(74) Representative: Grünecker Patent- und Rechtsanwälte PartG mbB
(86) International application number: PCT/US2009/039404
(87) International publication number: WO 2009/134586

(56) References cited:
- US-A1- 2002 124 076
- US-A1- 2003 177 201
- US-A1- 2003 217 116
- US-A1- 2006 026 511
- US-A1- 2007 180 354
- US-B1- 6 421 726

## Description

### BACKGROUND

Users working in a variety of different environments may wish to access any number of different documents that may be associated with different applications. In previous techniques, if a user wished to open a given document, the user would install the application for that document on a client system and then open the given document in the appropriate application. In more recent techniques, viewer clients (e.g., browsers) may be installed on the client system, and its clients may enable users to view documents online. However, these viewer clients may provide relatively low-fidelity views of the online documents, and the overall user experience when working with the viewer client may be dramatically different, as compared to working with the full-featured application. For example, some formatting supported by the full application may not carry through to the viewer client, and content rendered in the viewer client may appear differently than content rendered by the full application.

US 6,421,726 B1 relates to a system and method for the selection and retrieval of various types of video data from distributed delivery sites. A plurality of "Smart Mirror" sites are deployed throughout a network, each of which maintains a copy of certain data managed by the system. Each "Smart Mirror" site maintains copies of the data in several alternative file formats. The appropriate file format is automatically selected based on the capabilities of a user terminal making a request for data.

US 2002/124076 A1 relates to a method for automatically determining whether a browser supports scalable vector graphics ("SVG"). The method for automatically determining whether a browser supports SVG uses a two prong process in an attempt to make a proper detection for various types of browsers. In preferred embodiments, the method includes the steps of using JavaScript to detect Multipurpose Internet Mail Extensions ("MIME") types from the browser to detect SVG support. If scanning of the MIME types detects that SVG support is present, the version of the requested web page containing SVG content is sent. If no SVG support is detected in the returned MIME types, the non-SVG version of the web page is sent to the browser.

### SUMMARY

It is the object of the present invention to provide tools and techniques for rendering of documents in viewer clients.

This object is solved by the subject matter of the independent claims.

Embodiments are given in the dependent claims.

Methods provided by these tools and techniques may detect whether client systems have a plug-in installed for rendering high-fidelity content. in response to detecting that a given client system has installed the rendering plug-in, these methods may select a first high-fidelity format compatible with the plug-in for rendering the content on the client system. However, in response to detecting that the client system has not installed the rendering plug-in, the methods may select a second high-fidelity format for rendering the content on the client system, without installing the plug-in on the client system. These methods may also request document pages for rendering on the client system in the selected format, and may receive at least a subset of the document pages in the selected format.

The above-described subject matter may also be implemented as a method, computer-controlled apparatus, a computer process, a computing system, or as an article of manufacture such as a computer-readable medium. These and various other features will be apparent from a reading of the following Detailed Description and a review of the associated drawings.

This Summary is provided to introduce a selection of concepts in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Figure 1 is a combined block and flow diagram illustrating systems or operating environments that enable high-fidelity rendering of documents in viewer clients.
Figure 2 is a flow diagram illustrating processes by which client systems or systems may request particular documents for high fidelity display on such devices.
Figure 3 is a flow diagram illustrating processes that continue the processes shown in Figure 2.
Figure 4 is a flow diagram illustrating processes that continue the process is shown in Figures 2 and 3.
Figure 5 is a flow diagram illustrating processes for formatting pages for client-side viewers.
Figure 6 is a flow diagram illustrating processes for responding to user selections of content, as provided to the client-side viewer.
Figure 7 is a flow diagram illustrating processes for responding to additional user commands.
Figure 8 is a flow diagram illustrating processes by which the client-side viewer may enable the client system to search within content located remotely from the client system.

### DETAILED DESCRIPTION

The following detailed description is directed to technologies for high-fidelity rendering of documents in viewer clients. While the subject matter described herein is presented in the general context of program modules that execute in conjunction with the execution of an operating system and application programs on a computer system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including hand-held devices, multiprocessor systems, microprocessor-based or programmable consumer electronics, minicomputers, mainframe computers, and the like.

In the following detailed description, references are made to the accompanying drawings that form a part hereof, and which are shown by way of illustration specific embodiments or examples. Referring now to the drawings, in which like numerals represent like elements through the several figures, aspects of tools and techniques for high-fidelity rendering of documents in viewer clients will be described.

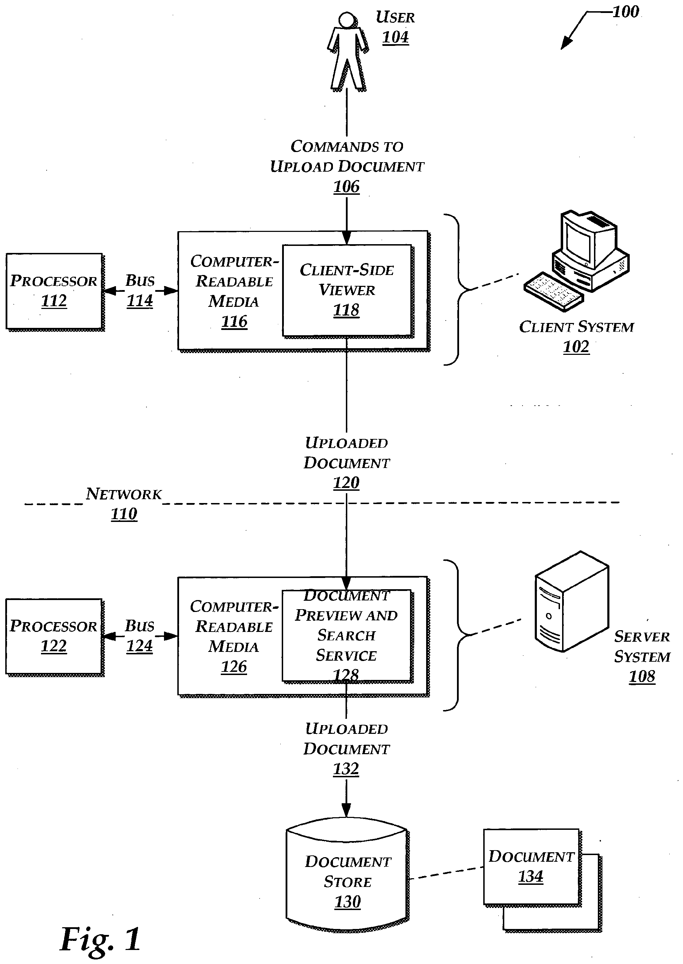

Figure 1 illustrates systems or operating environments, denoted generally at 100, that enable high-fidelity rendering of documents in viewer clients. These systems 100 may include one or more client systems 102 that enable one or more users 104 to issue appropriate commands 106 to upload documents to one or more server systems 108. Figure 1 provides an example including one user, one client system, and one server system only for clarity and illustration. However, implementations of the description herein may include any number of users, client system, and server systems.

The client systems 102 and its server systems 108 may communicate over one or more intermediate communications networks 110. These networks may be global, regional, local, or personal in nature, and may employ various protocols as appropriate in different implementations.

The graphical elements used in Figure 1 to depict the client systems and server systems are chosen only to facilitate illustration, and not to limit possible implementations of the description herein. More particularly, Figure 1 shows examples in which the server system 108 is a centralized computing system, possibly shared by more than one client system. The client system 102 may represent relatively stationary desktop systems, as well as mobile computing systems (e.g., laptops, notebooks, or other types of portable computing systems). In addition, the client system 102 may represent personal digital assistants (PDAs) with wireless communications capabilities, and with software components installed thereon for performing the various tools and techniques described herein. However, the description herein also contemplates other forms of client systems and server systems, including but not limited to, those shown in Figure 1.

Turning to the client systems 102 in more detail, the client systems may include one or more processors 112, which may have a particular type or architecture, chosen as appropriate for particular implementations. The processors 112 may couple to one or more bus systems 114 chosen for compatibility with the processors 112.

The client systems 102 may also include one or more instances of computer-readable storage media 116, which couple to the bus systems 114. The bus systems may enable the processors 112 to read code and/or data to/from the computer-readable storage media 116. The media 116 may represent storage elements implemented using any suitable technology, including but not limited to semiconductors, magnetic materials, optics, or the like. The media 116 may include memory components, whether classified as RAM, ROM, flash, or other types, and may also represent hard disk drives.

The storage media 116 may include one or more modules of instructions that, when loaded into the processor 112 and executed, cause the client system 102 to perform various techniques for high-fidelity rendering of documents in viewer clients, as allocated to the client systems 102 in this description. As detailed throughout this description, the client systems 102 and server systems 108 may cooperate to provide the various services described herein.

The computer-readable media 116 may include one or more modules that provide client-side viewers 118. The client-side viewers 118 may include browser software enhanced with capabilities as described herein to support multiple high-fidelity formats when rendering document content on the client system. In some instances, the client systems may include plug-in software that enables the viewers to render content in high-fidelity on the client using a given rendering format. Examples of such plug-in software may include the FLASH™ multimedia technologies available from Adobe Systems, the SILVERLIGHT™ browser plug-in available from Microsoft Corporation, or other browser plug-ins offering similar capabilities.

In other instances, the client systems may not include such plug-ins. Nevertheless, the tools and techniques provided in this description may render document content on the client systems in high-fidelity without installing such plug-ins on the client systems. In these latter scenarios, the client systems may utilize bitmap image formats (e.g., the Portable Network Graphics format, or PNG, or other suitable image formats supportable by available browser clients).

Initially, the client-side viewer may receive the commands 106 for uploading one or more documents to the server system 108 over the network 110. Figure 1 generally represents at 120 the uploaded document as transferred from the client system to the server system.

Turning to the server system 108 in more detail, the server systems may include one or more processors 122, which may have a particular type or architecture, chosen as appropriate for particular implementations. The processors 122 may or may not have the same type or architecture as the processors 112. The processors 122 may couple to one or more bus systems 124 chosen for compatibility with the processors 122, and may or may not be of the same type or architecture as the bus systems 114.

The server systems 108 may also include one or more instances of computer-readable storage media 126, which couple to the bus systems 124. The bus systems may enable the processors 122 to read code and/or data to/from the computer-readable storage media 126. The media 126 may represent storage elements implemented using any suitable technology, including but not limited to semiconductors, magnetic materials, optics, or the like. The media 126 may include memory components, whether classified as RAM, ROM, flash, or other types, and may also represent hard disk drives.

The storage media 126 may include one or more modules of instructions that, when loaded into the processor 122 and executed, cause the server system 108 to perform various techniques for high-fidelity rendering of documents in viewer clients, as allocated to the server system 108 in this description. As detailed throughout this description, the client systems 102 and server systems 108 may cooperate to provide the various services described herein.

The computer-readable media 126 may include one or more server-side modules that provide document preview and search services, denoted generally at 128. Initially, these services 128 may store the upload a document 120 into a document store 130 for later reference by the user 104, or by other users not shown. Figure 1 denotes the document as uploaded to the document store at 132. the document store 130 may store a plurality of documents 134 on behalf of a variety of different users 104 and client systems 102.

The documents 134 may represent documents readable by a variety of different respective applications, whether these applications perform word processing, spreadsheet analysis, database support, mail or communications, scheduling, or the like. In some cases, some or all of these applications may be grouped together and marketed collectively. For example, Microsoft Corporation offers suites of such applications under the trademark OFFICE®, but other software vendors may offer other suites of applications that may implement all or parts of this description.

As provided in more detail throughout this description, the tools and techniques provided herein enable client systems to render at least portions of the documents 134 in high fidelity, without launching the applications normally used to open and edit these documents. It is noted that the term "high-fidelity" is used herein to distinguish from the term "full fidelity". The latter term would suggest complete, 100% fidelity between the document as it would appear when opened in the appropriate application, as compared to being viewed in the viewer 118.

For conciseness of description and illustration only, Figure 1 provides an example in which one server receives the uploaded document 120, and also converts the documents as appropriate for rendering them on the client systems. However, it is noted that implementations of this description may include a number of different servers that perform respective assigned functions. For example, a first group of one or more servers may receive and store the uploaded documents on behalf of a variety of client systems. Another group of one or more servers may perform any conversions appropriate for rendering these documents on client systems. Put differently, the server that receives the uploaded document may not be the same server that supports rendering that document on a client system.

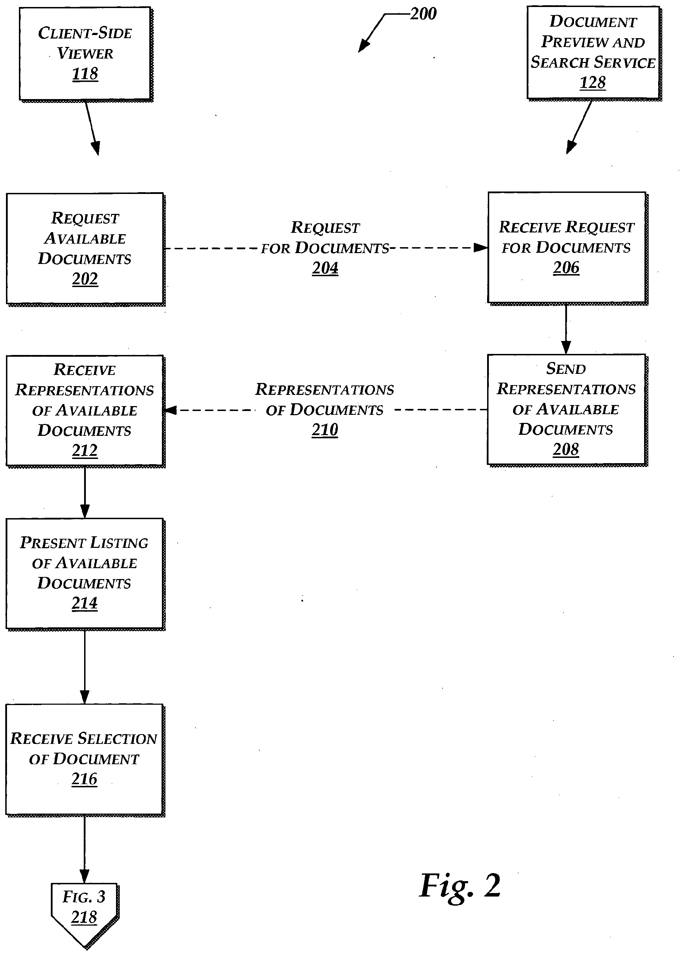

Having described the overall systems or operating environments 100 in Figure 1, the discussion now turns to a description of process flows by which client systems may request particular documents for high fidelity display on the client systems. This description is now provided with Figure 2.

Figure 2 illustrates process flows, denoted generally at 200, by which client systems may request particular documents for high fidelity display on such devices. For ease of reference and description, but not to limit possible implementations, Figure 2 may carry forward some items from previous drawings, and label them with similar reference numbers. For example, the process flows 200 are described in connection with the client-side viewer 118 and the server-side document preview and search service 128. However, implementations of this description may perform the process flows 200 on other components without departing from the scope of this description.

Turning to the process flows 200 in more detail, block 202 generally represents requesting a listing of documents available on the server system for searching and viewing. For example, the client system 102 may perform block 202 in response to a command from the user 104. Figure 2 denotes the request for a document listing at 204.

At the server, block 206 generally represents receiving the request for a document listing. In turn, the search service 128 may refer to the document store 130 and determine which documents 134 are available for access to the user 104.

Block 208 generally represents sending representations of available documents to the client system, for presentation in the client-side viewer 118. Figure 2 generally denotes these representations of available documents at 210.

At the client system, block 212 generally represents receiving the representations of documents stored on the server system that are available to the requesting user. In turn, the client-side viewer 118 may present to the user a listing of these available documents, as represented generally in block 214. The user may review the listing of available documents, and select a given document for viewing on the client system, as represented generally by block 216.

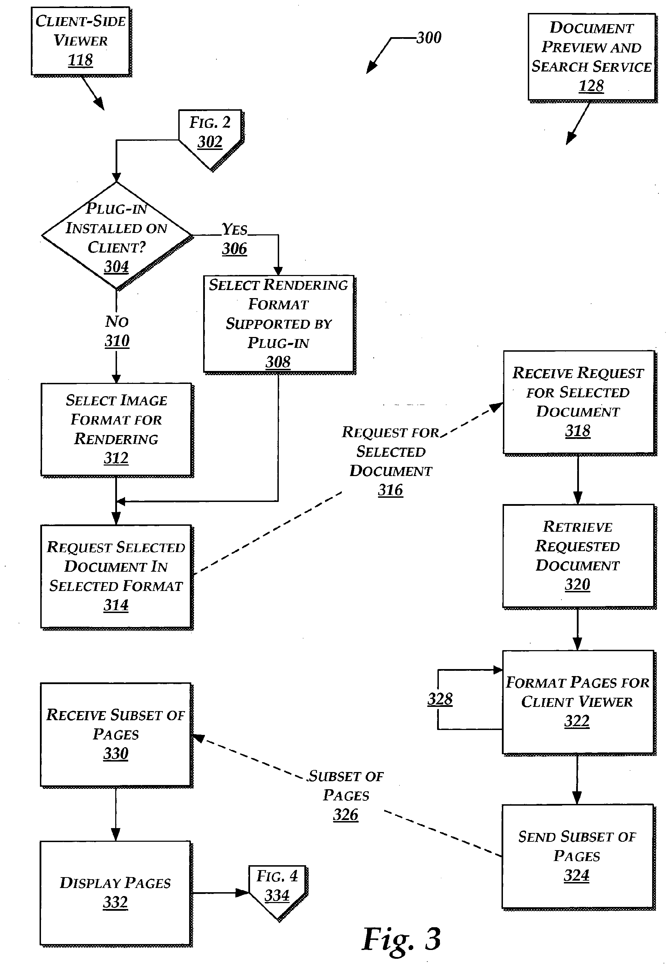

For clarity of illustration, not to limit possible implementations, the process flows 200 are continued in Figure 3, as indicated by the off-page reference 218. The discussion now continues to Figure 3.

Figure 3 illustrates process flows, denoted generally at 300, that continue the process flows 200 shown in Figure 2, as indicated by the off-page reference 302. The client-side viewer 118 and the document preview and search service 128 are carried forward into Figure 3.

Decision block 304 generally represents evaluating whether a given client system has installed a plug-in component for a given high fidelity rendering format. As described above, examples of these plug-ins may include software components offered under the trademarks FLASH™, SILVERLIGHT™, or other components having similar capabilities.

From block 304, if the given client system has installed the plug-in component, the process flows 300 may take Yes branch 306 to block 308. Block 308 represents selecting a format supported by the plug-in for rendering content on the client system for presentation by the client-side viewer 118.

Returning to decision block 304, if the given client system has not installed the plug-in component, the process flows 400 may take No branch 310 to block 312. Block 312 generally represents selecting an image format for rendering document content in high fidelity on the client systems. The discussion above provides an example using the PNG image format; however, other image formats may be suitable in different implementations. For example, if the majority of the content on a given page is an image, then that particular page may be rendered as a JPG image to provide higher image quality and a higher compression ratio.

Block 314 generally represents requesting to preview the document selected in block 216. Block 314 may include requesting that the document preview be presented in the format determined by decision block 304. Figure 3 generally represents at 316 the request for the selected document, along with an indication of a format supported by the client system.

At the server system, block 318 generally represents receiving the request 316 for the selected document. Block 318 may include receiving an indication of a format supported by the client system.

Block 320 generally represents retrieving the selected document in response to the request 316. Block 320 may include retrieving the requested document from a document store (e.g., 130 in Figure 1).

Block 322 generally represents formatting pages within the requested document as appropriate for the client viewer. For example, block 322 may include converting or rendering the pages into an image representation, or a XAML representation. For example, this conversion process may include using .dll files shared with a client application to load and/or read the pages of the document, lay out the contents of the document into pages, slides, or other convenient representation. The conversion may also include performing an emulated printing process to an enhanced metafile format (e.g., EMF, as described in further detail below), and using the EMF for the page to derive either an image representation or a XAML representation for the given page. As detailed further below, this conversion process may also generate position-based metadata used in the selection/find operations provided in this description.

Once block 322 has formatted some subset of the pages within the requested document, block 324 represents sending a subset of the formatted pages to the requesting client system. Figure 3 generally represents the subset of formatted pages at 326.

In parallel with block 324, which sends the subset of pages to the client systems, block 322 may continue to format additional pages of the document, as represented generally by the arrow 328. In this manner, as described in further detail below, the document preview and search service 128 may allow the client-side viewer 118 to begin presenting a preliminary set of pages, while the server is continuing to convert the rest of the document into the appropriate format. Thus, the client system does not wait until the server has formatted the entire document before seeing at least some of the content within the document. Put differently, the ascription herein enables the client system and the server to provide incremental views of the document content.

Turning to the client-side viewer 118, block 330 generally represents receiving the subset of formatted pages 326. In turn, block 332 represents displaying this subset of pages through the viewer 118. In this manner, block 332 may enable a user (e.g., 104) to preview, for example, the first few pages within a given document in the selected high-fidelity format, without waiting for the server to format or convert the entire given document.

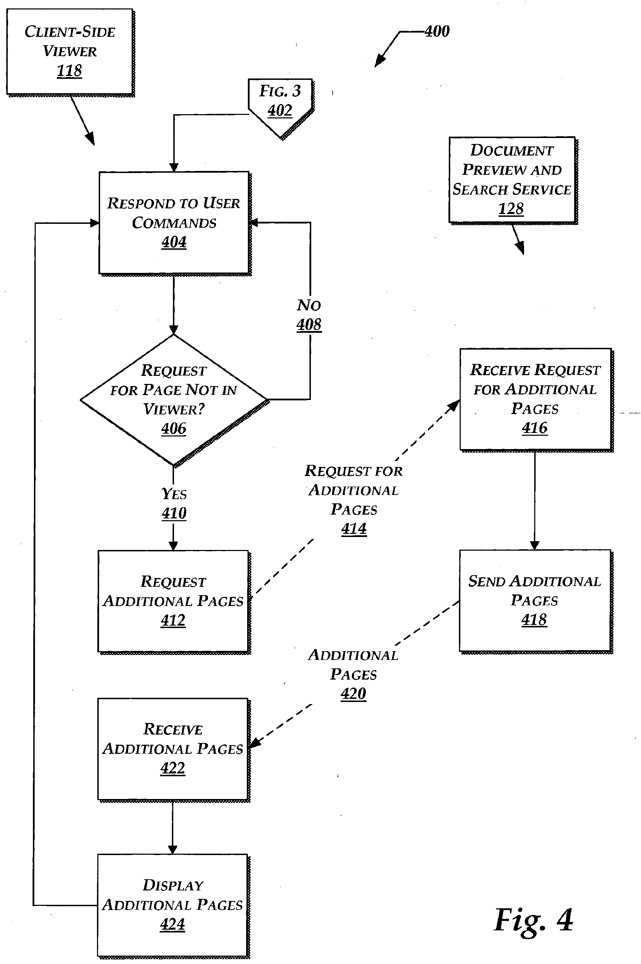

For clarity of illustration and description, but without limiting possible implementations, the description of the illustrative process flows 300 continues to Figure 4, as indicated by the off-page reference 334. The discussion of these process flows now proceeds with Figure 4.

Figure 4 illustrates continued aspects, denoted generally at 400, of the process flows carried forward from Figures 2 and 3. Figure 4 includes off-page reference 402 to associate the process flows 400 with the process flows 300 shown in Figure 3. For ease of reference and description, but not to limit possible implementations, Figure 4 may carry forward some elements from previous drawings, and refer to them with similar reference numbers. For example, Figure 4 carries forward the client-side viewer 118 and the server-side document preview and search service 128.

Turning to the process flows 400 in more detail, block 404 generally represents responding to user commands directed to the pages displayed previously in block 332. These commands may include, for example, navigation or scrolling commands by which the user may view the initial subset of pages delivered for a given document.

Decision block 406 presents determining whether the commands issued by the user request pages not currently available to the client-side viewer. Put differently, block 406 may determine whether the user has requested a page of document content not included in the initial subset of delivered and formatted pages shown at 326 in Figure 3. If decision block 406 determines that the user requests may be satisfied with pages currently available to the client-side viewer, the process flows 400 may take No branch 408 to return to block 404, which was described above.

Returning to decision block 406, if the commands issued by the user request pages not included in the initial subset of pages 326, the process flows 400 may take Yes branch 410 to block 412. Block 412 represents requesting additional pages of the document from the server, with this request denoted generally at 414. The request 414 may indicate a rendering format for the requesting client, and may also indicate whether to send the remaining unsent pages in the document, or whether to send some subset of the remaining unsent pages.

At the server, block 416 generally represents receiving the request 414 for additional pages of the given document. As represented at 328 in Figure 3, while the client viewer is displaying the preliminary subset of formatted and delivered pages 326, the server system they work concurrently to format additional pages for eventual sending and presentation to the client viewer. Thus, if a request 414 for additional pages arrives from the client viewer, the server system may send additional pages to the client viewer, as represented generally at 418. Block 418 may include sending all of the remaining unsent pages in the document, or may include sending another subset of these remaining pages. Figure 4 generally represents these additional pages at 420.

Returning to the client system, block 422 generally represents receiving the additional pages 420 in response to the request 414. In turn, block 424 represents displaying the additional pages in the client-side viewer 118. As indicated by the arrow connecting block 424 to block 404, the process flows 400 may return to block 404 to await and respond to user commands directed to the additional pages displayed in block 424.

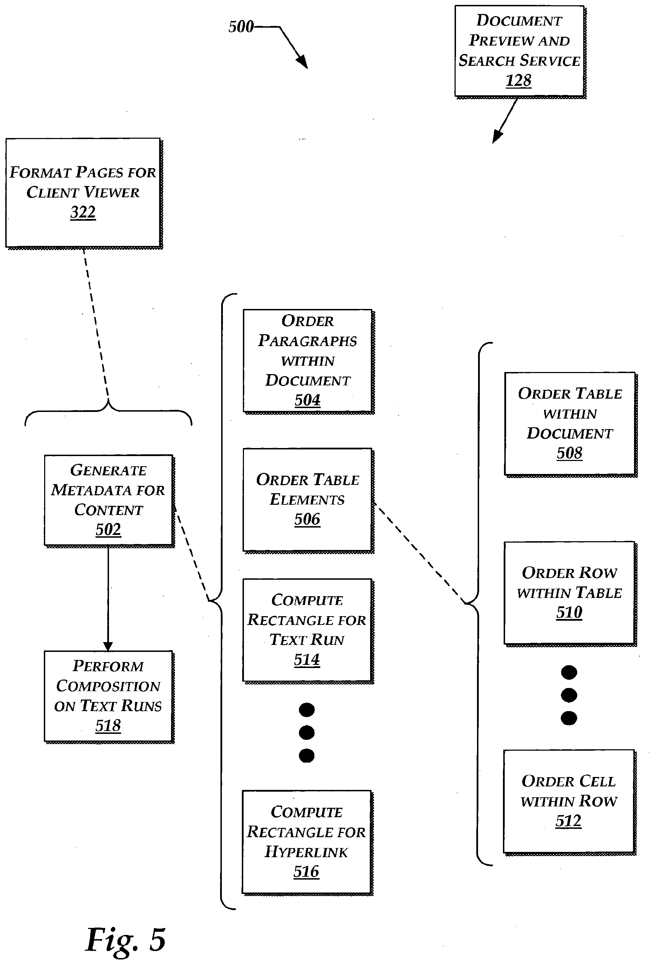

Having described the process flows shown in Figures 2, 3, and 4, the discussion now turns to a description of additional details relating to formatting pages for the client viewers. This description is now provided with Figure 5.

Figure 5 illustrates process flows, denoted generally at 500, that provide additional details relating to formatting pages for the client viewers. For ease of reference and description, but not to limit possible implementations, Figure 5 may carry forward items from previous drawings, and refer to them with similar reference numbers. For example, Figure 5 carries forward the server-side document preview and search service 128. More specifically, the process flows 500 elaborate on process block 322 as shown in Figure 3.

Turning to the process flows 500 in more detail, block 502 represents generating position-based metadata for content on the various pages within a given document. Block 502 may include generating the metadata in a uniform manner, regardless of whether the client system has installed plug-in components for rendering content in high-fidelity. As described in further detail below, the client viewer may use this metadata to implement features including, but not limited to, selecting content, copying content, searching for particular content within a given document, preservation of hyperlink appearing within the document, or the like.

In some implementations, the position metadata may be generated in an XML format. Further, the position metadata may be derived from an enhanced metafile (EMF) representation produced by the server system as an intermediate step in formatting or converting the document pages for the client-side viewers. While EMF representations are provided here as an example, implementations of this description may use other equivalent representations providing features or capabilities that are similar to EMF. For example, comment records associated with these representations may specify document structure, as well as providing semantic information that indicates where text runs start and end. This semantic information may also identify internal and external hyperlinks occurring within pages of the document. The EMF representations may also indicate where drawings or images occur within the document.

By combining the above structural and semantic information with drawing or image information, block 502 may establish different types of information relating to a given document, and include this information within the metadata generated for pages within the document. For example, block 504 represents ordering paragraphs within a given document. More specifically, block 504 may include specifying, for different paragraphs in the document, a number indicating the order in which the paragraphs occur in the document with respect to other paragraphs, tables, figures, images, or the like.

Block 506 represents ordering elements within a table occurring within the document. More specifically, block 508 represents, for different tables within a given document, specifying a number indicating the order in which the tables occur within the document, with respect to other paragraphs, tables, figures, images, or the like. In addition, block 510 represents ordering different table rows within a given table, and block 512 represents ordering different cells within a given row within a given table.

Block 514 generally represents computing a bounding rectangle for a given text run occurring within a line in the document. For example, block 514 may include computing coordinates of a top left corner of the bounding rectangle, along with the length and height of the rectangle. In some implementations, block 514 may also include defining a Unicode string that represents the glyphs in the text run. The bounding rectangle may be expressed in terms of pixels, and may be defined relative to the top-left of the page on which the text run occurs. While some implementations may compute these bounding rectangles, other implementations may calculate the positions for particular glyphs or characters within a text run, and pass these positions down to the client-side viewer. These latter implementations may allow selection at the level of individual characters.

The term "text run" refers to a sequence of characters that share common formatting, fonts, or other characteristics. Text runs may be broken by characters exhibiting changes in any of the above characteristics. In addition, text runs may occur within a given line of text, but (in some example implementations) do not span over more than one line within a paragraph.

Block 516 represents computing respective bounding rectangles for the sources of any hyperlinks occurring within pages of a document. If the hyperlink refers to a target that is external to the document, block 516 may include the URL of the target within the metadata. If the hyperlink refers to an internal target within the given document, block 516 may include the target page number and coordinates of the target within the metadata.

Block 518 represents performing compositions on text runs to produce information for lines within a paragraph. More specifically, block 518 may include analyzing the bounding rectangles for text runs occurring within a paragraph to determine which text runs fall within the same line. Block 518 may include organizing text runs into lines, because typical users more readily understand lines of text as compared to text runs of characters.

The document preview and search service 128 may provide the position-based metadata to the client systems for use by the client-side viewer (e.g., 118). For example, the metadata may be included as part of the pages 326 and/or 420, as shown in Figures 3 and 4, respectively. The following XML provides an example of position metadata, with the understanding that this example is provided only to illustrate this discussion, but not to limit possible implementations of this description:

```
 <page id="1">
   <paragraph order="1">
        <line top="10px" left="15px" width="700px" height="8px"
        text="This is the first line within paragraph 1."/>
        <line top="20px" left="15px" width="700px" height="8px"
        text="This is the second line within paragraph 1."/>
   </paragraph>
   <table order="2">
        <tr>
             <td>
                 <paragraph order="3">
                      <line top="30px" left="30px" width="200px"
                      height="8px" text="This is the first cell in the table."/>
                 </paragraph>
             </td>
             <td>
                 <paragraph order="4">
                      <line top="30px" left="400px" width="200px"
                      height="8px" text="This is the second cell in the table."/>
                 </paragraph>
             </td>
        </tr>
   </table>
   </page>
```

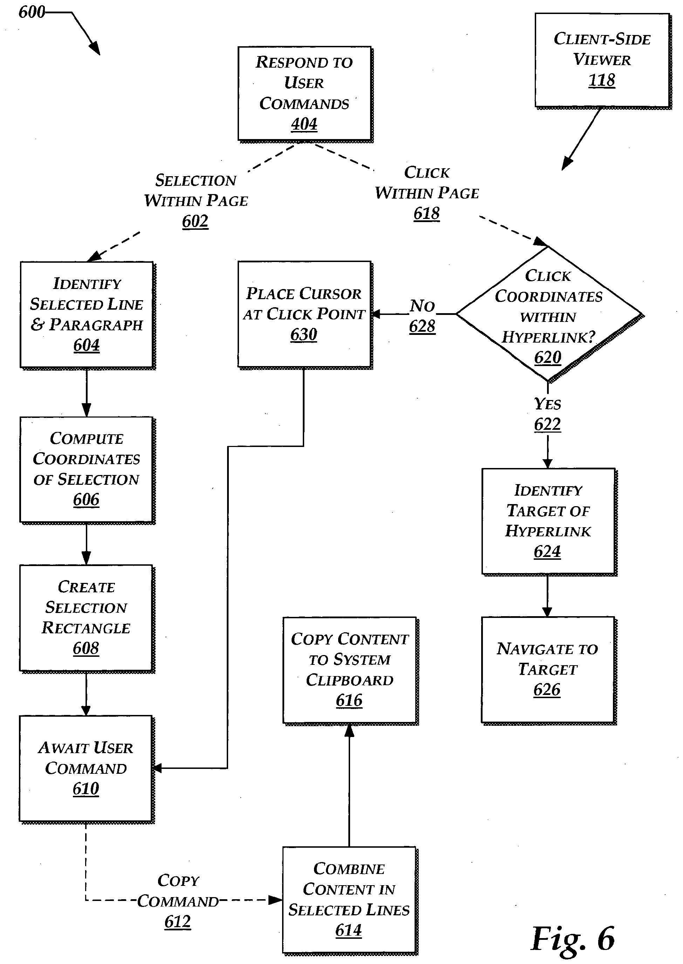

Having described the process flows 500 that provide additional details relating to formatting pages for the client viewers, the discussion now turns to a more detailed description of different types of user commands to which the client-side viewer may respond. This discussion is now presented with Figure 6.

Figure 6 illustrates process flows, denoted generally at 600, that provide additional details relating to responding to user selections of content, as provided to the client-side viewer. For ease of reference and description, but not to limit possible implementations, Figure 6 may carry forward items from previous drawings, and refer to them with similar reference numbers. For example, Figure 6 carries forward the client-side viewer 118. More specifically, the process flows 600 elaborate on process block 404 as shown in Figure 4.

Turning to the process flows 600 in more detail, the position-based metadata, as described above in Figure 5 and as provided to the client-side viewer 118, may enable the viewer to respond to a variety of different user commands, represented generally in block 404. For example, the user may select particular content appearing within the viewer, as represented generally at 602. This content may include representations of text presented in the viewer, as well as tables, diagrams, shapes, images, or other types of content presented in the viewer. This selection action 602 may include the user clicking or otherwise activating a pointer device at some position within a given page of rendered content, and dragging the pointer across some portion of content, thereby selecting a block of such content. The selection action 602 may also include the user clicking multiple times on the content within the page (e.g., a given word, paragraph, table, image, or the like).

In response to the selection action, block 604 represents identifying content within the page containing the position where the selection action occurred within the page. Examples of this selected content may include text runs, lines, paragraphs, shapes, tables, images, or the like, as described above. For example, received indication that the user clicked at some position within a given page, block 604 may include searching the position-based metadata for this page, to determine whether this click occurred within a line and/or paragraph within the page, and if so, identifying the line and/or paragraph clicked by the user. Recalling the description of Figure 5, block 514 represents computing bounding rectangles for different text runs, so block 604 may include searching representations of these bounding rectangles with the coordinates of a given click, to determine whether these coordinates fall within any of the bounding rectangles.

Block 606 generally represents computing or identifying the coordinates of the line of content selected by the user using, for example, a click-drag action. For example, assuming that a given click action falls within the bounding rectangle of a line of text, as indicated in the position-based metadata, block 606 may include identifying the coordinates that define this bounding rectangle.

Block 608 generally represents creating a visual representation of a selection rectangle having the coordinates that were computed in block 606. For example, block 608 may include highlighting the selected content with an appropriate transparent background (e.g., a blue background). More specifically, block 608 may include creating an HTML "div" with the dimensions of the selection rectangle, and superimposing the background on the selected content. This highlighting may indicate to the user that the content is now selected.

In implementations in which the client system has installed a plug-in for rendering high-fidelity content (e.g., SILVERLIGHT™), an HTML "div" may be superimposed on a control associated with this high-fidelity rendering. Therefore, blocks 604-608 may operate the same, regardless of whether a given client system has installed a plug-in or not.

Block 610 generally represents awaiting a user command to be directed against the content within the selection rectangle created in block 608. As a non-limiting example, the user may issue a copy command, as represented generally at 612. In response to this example copy command, the process flows 600 may proceed to block 614, which generally represents combining any content in one or more lines of selected content (assuming the user has block-selected multiple lines of content). In turn, block 616 represents copying the selected content to a system clipboard, or other suitable data structure in which content may be cut and/or copied within a given application, or between different applications.

Returning to block 404 in Figure 6, block 404 may also include receiving a click or other equivalent action within a given page of content, as represented generally at 618. The click action 618 is distinguished from the click-drag or other block-selection action represented at 602. For example, the click action 618 may include a single click within the page of content.

Decision block 620 generally represents determining whether the user clicked upon a hyperlink defined within the page of content. Recalling the description of Figure 5 above, block 516 represents computing a bounding rectangle for any hyperlinks within a given page of content. Therefore, block 620 may include comparing the coordinates of the click with the bounding rectangles for the hyperlinks occurring within the page, to determine whether the click falls within any of the bounding rectangles for the hyperlinks.

If the click is on a hyperlink, as opposed to a click-drag action that selects some block of content, then the process flows 600 may forego the creation of a "highlight" HTML div with a transparent background, which was represented in block 608. Otherwise, the overall selection mechanism may operate similarly, whether the user clicks on a hyperlink or selects a block of content. In some cases, the user may click-drag to select or activate the text of the hyperlink.

From decision block 620, if the click falls upon a hyperlink, the process flows 600 may take Yes branch 622 to block 624, which represents identifying a target specified by the hyperlink within the position-based metadata. As described above, the target of the hyperlink may be external to the given document (e.g., to an external URL). In addition, the target of the hyperlink may be internal to the given document (e.g., a link to a different line within a given page, a link to another page, or the like). In turn, block 626 represents navigating to the internal or external target of the hyperlink.

Returning to decision block 620, if the user clicks does not fall upon a hyperlink, the process flows 600 may take No branch 628 to block 630. Block 630 may include placing a text cursor or other similar UI element within the content at the point where the user clicked. From block 630, the process flows 600 may proceed to block 610 to await the next user command or action, which in this scenario may be a selection or navigation action entered via keyboard action or other suitable mechanism.

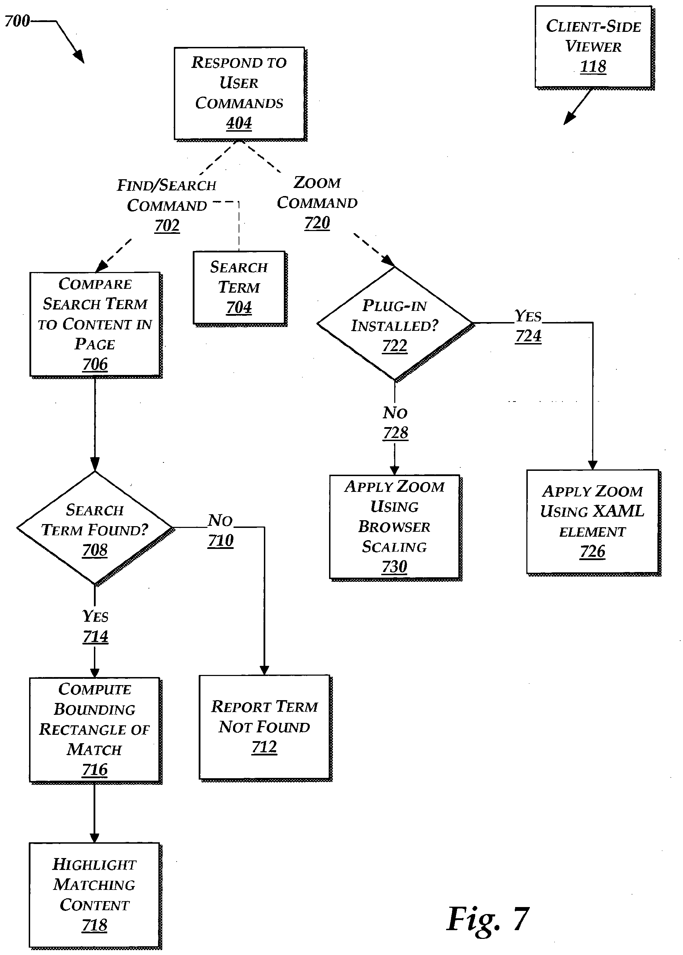

Having described the additional aspects of responding to user selections of content in Figure 6, the discussion now proceeds to description of additional commands to which the client-side viewer may respond. This discussion is now presented with Figure 7.

Figure 7 illustrates process flows, denoted generally at 700, that it examples of additional commands to which the client-side viewer may respond. For ease of reference and description, but not to limit possible implementations, Figure 7 may carry forward items from previous drawings, and refer to them with similar reference numbers. For example, Figure 7 carries forward the client-side viewer 118. More specifically, the process flows 700 elaborate further on process block 404 as shown in Figure 4.

Turning to the process flows 700 in more detail, Figure 7 illustrates an example scenario in which the user may issue a find or search command (hereinafter, a "find" command) to the client-side viewer, as represented at 702. However, the process flows 700 may initiate in response to search commands issued from a search engine webpage. These process flows may also initiate in response to a search command issued with an email application. For example, a given user may wish to search his or her emails for a given search string. In another example, within an enterprise context, the process flows 700 may initiate in response to search or find commands issued within a document sharing or collaboration environment.

The find command may reference one or more search terms, denoted generally at 704. In response to the find command, block 706 may compare the input search terms to content within a given page rendered by the client-side viewer. For example, block 706 may include performing a string comparison of the search term against the Unicode text for different lines in the page. In turn, decision block 708 may determine whether the input search terms occurred within the page content. If the input search terms do not occur within the page content, the process flows 700 may take No branch 710 to block 712, which represents reporting that the search terms were not found.

Returning to decision block 708, if the input search terms occur at least once in the page content, the process flows 700 may take Yes branch 714 to block 716, which represents computing bounding rectangles of any matching page content. Recalling the previous description of Figure 5, the position-based metadata computed in block 514 may include bounding rectangles for different text runs. When characters within these text runs match input search terms, block 716 may include extracting the bounding rectangles from the metadata that corresponds to matching text.

Block 718 generally represents highlighting any matching content occurring within given page content. Block 718 may use the techniques described above with block 608 in Figure 6 to create a selection rectangle that is superimposed upon matching portions of the page content.

Returning to block 404, which represents responding to various user commands as directed to the client-side viewer 118, the user may issue zoom commands, denoted generally at 720. In response to receiving a zoom command, the process flows 700 may proceed to decision block 722, which represents determining whether the client system running the client-side viewer has installed a plug-in for rendering high-fidelity content. The client-side viewer 118 may provide zoom functions whether or not the client system has installed the plug-in. However, the viewer may provide zoom capability using different techniques, depending on whether or not the client system has installed the plug-in.

From decision block 722, if the client system has installed the plug-in, the process flows 700 may take Yes branch 724 to block 726, which generally represents applying a zoom function using a transform operations supported by the plug-in. For example, assuming that the plug-in is the SILVERLIGHT™ browser plug-in, block 726 may include using a RenderTransform XAML element to apply a zoom transform to the content of a page canvas. However, these examples are provided only for illustration, and not to limit possible implementations, which may include a variety of different plug-ins and transform operations supported by the plug-ins. Generally, the process flows 700 may enable this functionality locally on the client system, without a round-trip message flow between the client system and the server.

Returning to decision block 722, if the client system has not installed the plug-in, the process flows 700 may take No branch 728 to block 730, which represents applying a zoom operation using browser-supported image scaling. Whether or not the plug-in is installed, the client-side viewer 118 may provide a variety of different zoom levels over a pre-determined range (e.g., from around 33% to around 400%). In an example scenario, the client-side viewer 118 may display page content at 100% zoom.

Having provided the above examples of different commands in Figures 6 and 7, it is noted that these examples are illustrative rather than limiting in nature. More specifically, implementations of this description may include commands other than those provided in these examples without departing from the scope of this description.

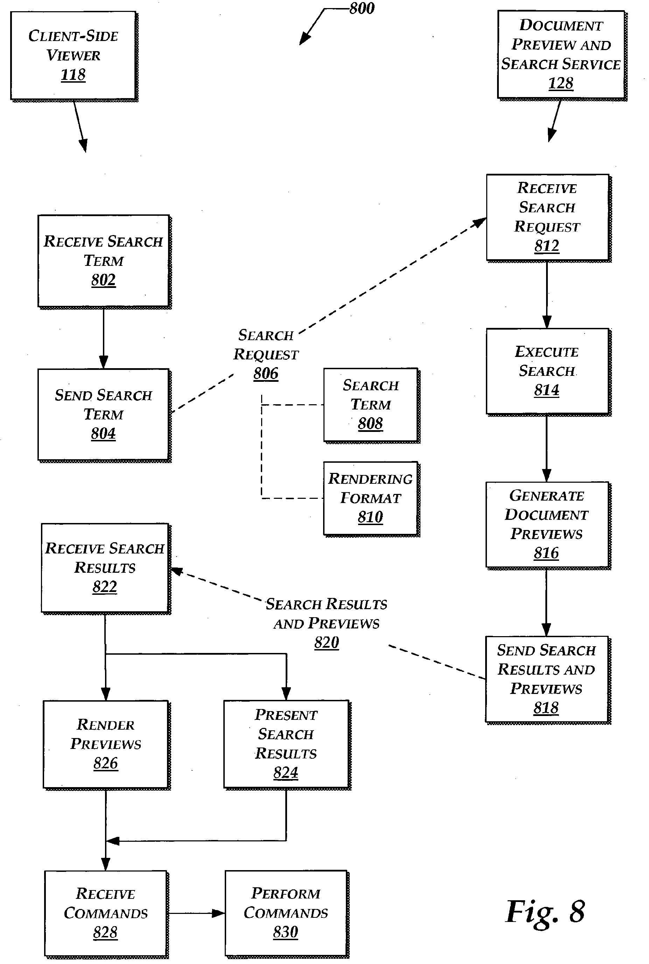

Having described the process flows 700 in Figure 7, the discussion now turns to a description of process flows by which the client-side viewer may enable a client system to search within content located remotely from the client system. This description is now provided with Figure 8.

Figure 8 illustrates process flows, denoted generally at 800, that provide process flows by which the client-side viewer may enable a client system to search within content located remotely from the client system. For ease of reference and description, but not to limit possible implementations, Figure 8 may carry forward items from previous drawings, and refer to them with similar reference numbers. For example, Figure 8 carries forward the client-side viewer 118 and a document preview and search service 128. In addition, for purposes of this description but not to limit possible implementations, Figure 8 arranges illustrates certain portions of the process flows 800 as being performed by the client-side viewer and the document preview and search service. However, other components may perform portions of the process flows 800 without departing from the scope of the present description.

Turning to the process flows 800 more detail, block 802 represents the client-side viewer receiving one or more search terms. Block 802 may include receiving search terms as provided by a user (e.g., 104 in Figure 1). In turn, block 804 represents sending a search request 806 to the document preview and search service 128 for search. The search request 806 may include one or more input search terms 808, and may also specify a high-fidelity format 810 to be used in rendering content on the client system.

At the document preview and search service 128, block 812 represents receiving the input search term and rendering format. In turn, block 814 represents searching for the input term at least one data store accessible to the document preview and search service. Recalling the previous description of Figure 1, the document preview and search service 128 may maintain a document store 130 that includes a plurality of documents 134, and block 814 may include searching for the input terms in one or more such document stores.

Block 816 generally represents generating document previews indicating where the input search terms occurred within one or more documents searched in block 814. Block 816 may include generating document previews based on the rendering format 810 specified in the search request 806. Recalling previous description, in different scenarios, the client system running the client-side viewer may or may not have installed a plug-in component that supports high-fidelity rendering of content on the viewer. The rendering format 810 may indicate whether or not the client-side viewer has the plug-in installed.

Block 816 may include generating a listing of search results, and may also include generating a preview of the search results as they occur within one or more documents. More specifically, block 816 may include generating the preview to be rendered in the specified format on the client-side viewer. As part of generating the preview, block 816 may include referring to position-based metadata computed for the document in which a hit occurs. In turn, block 818 generally represents sending any search results and reflated document previews to the client-side viewer, as denoted generally at 820. If position-based metadata for the documents had not already been sent to the client-side viewer, the search results and previews 820 may include this metadata, for the use of the client-side viewer.

At the client-side viewer, block 822 represents receiving the search results and document previews 820. In cases where the client-side viewer does not already contain position-based metadata for documents containing hits, block 822 may include receiving such metadata with the search results and previews 820.

Block 824 represents presenting the search results in the client-side viewer, and block 826 represents rendering previews of "hits" occurring within one or more documents containing the specified search terms 808. In example implementations, search results may be presented respectively beside the previews showing where the search terms occurred within the documents. Block 826 may include highlighting the search terms as located within the documents. In addition, block 826 may include scrolling within the document to the page on which the first hit occurs.

Block 828 generally represents receiving commands from the user directed to the search results and/or the document previews presented in blocks 824 and 826. For example, a user may select to open within the client-side viewer a document found to contain one or more occurrences of the input search term. In this example, any highlight applied to "hits" may be maintained when the document is opened. As another example, the user may navigate or scroll through the search results and/or the document previews. These examples of commands are understood to be illustrative and non-limiting in nature, and implementations of this description may include other commands.

Block 830 represents executing or performing the commands received in block 828. In some instances, block 830 may include referring to the position-based metadata in performing these commands. For example, block 830 may refer to this metadata to perform any other function shown in Figure 6 and 7 within the search environment shown in Figure 8.

While Figure 8 illustrates one iteration of the process flows 800 for purposes of this description, it is noted that implementations of this process flow may repeat any number of times for different search terms. In addition, the process flows 800 may be implemented in any number of client systems (e.g., 102) and corresponding client-side viewers (e.g., 118).

Although the subject matter presented herein has been described in language specific to computer structural features, methodological acts, and computer readable media, it is to be understood that the invention defined in the appended claims is not necessarily limited to the specific features, acts, or media described herein. Rather, the specific features, acts and mediums are disclosed as example forms of implementing the claims.

The above description may be provided in connection with one or more flowcharts or flow diagrams to illustrate various processes. These processes are shown as proceeding in the orders provided only to facilitate the present description, not to limit possible implementations. More specifically, these processes, or components thereof, may proceed in orders other than those shown herein without departing from the scope of the present description.

## Claims

1. A computer-readable storage medium (116) having computer-executable instructions (118) stored thereon which, when executed by a computer, cause the computer to:
detect (304) whether a client system (102) has a rendering plug-in installed for rendering of document content on a client system;
in response to detecting that the client system has the rendering plug-in installed, select (308) a first format compatible with the plug-in for rendering the content; otherwise:
in response to detecting that no rendering plug-in is installed on the client system, select (312) a second format for rendering the content on the client system without installing any plug-in on the client system;
request (314) at least one document having a plurality of pages for rendering on the client system in the selected format; and
receive (330) a subset (326) of the document pages in the selected format.

2. The storage medium of claim 1, wherein the instructions for selecting the second format include instructions for selecting an image format or a Portable Network Graphics, PNG, format.

3. The storage medium of claim 1, further comprising instructions for requesting at least one additional page of the document, wherein the at least one additional page is not included in the subset, and further comprising instructions for receiving at least the additional pages.

4. The storage medium of claim 1, further comprising instructions for displaying the subset of document pages on the client system, and further comprising instructions for providing zoom functionality locally on the client system without round-trip message flow between the client system and a server.

5. The storage medium of claim 4, wherein the instructions for providing zoom functionality include instructions for applying zoom transforms using browser-supported scaling or using an operation supported by the plug-in.

6. The storage medium of claim 1, further comprising instructions for receiving position-based metadata computed for the content.

7. The storage medium of claim 6, further comprising instructions for responding to user commands by referring to the position-based metadata.

8. A method for providing rendering of document content on a client system (102), without installing a plug-in for rendering the content on the client system, the method comprising:
receiving (318) a request (316) for at least one selected document (134) having a plurality of pages, wherein the request specifies one of at least two rendering formats supported by the client system, wherein a first one of the rendering formats is compatible with a previously installed rendering plug-in and wherein a second one of the rendering formats is for rendering the content on the client system without installing any plug-in on the client system;
formatting (322) a subset of the pages in the specified rendering format;
sending (324) the subset of pages (326) to the client system for rendering;
receiving (416) a second request (414) for at least a further page (420) not included in the subset of pages and having a specified rendering format;
formatting (328) the at least a further page in the specified rendering format; and
sending (418) the at least a further page to the client system for rendering.

9. The method of claim 8, further comprising generating position-based metadata for content included in the document.

10. The method of claim 9, wherein generating position-based metadata includes ordering paragraphs within the document and/or for ordering table elements within the document.

11. The method of claim 9, wherein the generating position-based metadata includes viewing a bounding rectangle for at least one text run within the document or for at least one hyperlink within the document.

12. The method of claim 9, further comprising sending the position-based metadata to the client system.

13. The method of claim 8, further comprising performing composition on at least one text run occurring within the document.

14. The method of claim 8, wherein the request is a request (806) to search for at least one term (808) within the at least one document (134), and wherein the method further comprises:
searching (814) for the term in the at least one document;
in response to locating at least one occurrence of the term in the at least one document:
generating (816) a document preview in the specified rendering format, indicating at least the occurrence of the search term in the at least one document;
generating search results (820) indicating where the search term occurs in the at least one document; and
sending (818) the document preview and the search results to the client system.

15. The method of claim 14, further comprising sending to the client system position-based metadata computed for the at least one document and instructions for referring to the metadata in responding to at least one user command directed to the document preview.

## Patentansprüche

1. Computerlesbares Speichermedium (116) mit darin gespeicherten computerausführbaren Befehlen (118), die bei Ausführung durch einen Computer, den Computer veranlassen, um:
zu erfassen (304), ob ein Klientensystem (102) ein erzeugendes Einschubmodul hat, das zur Erzeugung eines Dokumenteninhalts in einem Klientensystem installiert ist;
in Reaktion auf das Erfassen, dass das Klientensystem das erzeugende Einschubmodul installiert hat, ein erstes Format, das mit dem Einschubmodul zur Erzeugung des Inhalts kompatibel ist, auszuwählen (308); ansonsten:
in Reaktion auf das Erfassen, dass kein erzeugendes Einschubmodul in dem Klientensystem installiert ist, ein zweites Format zur Erzeugung des Inhalts in dem Klientensystem ohne Installation eines Einschubmoduls in dem Klientensystem auszuwählen (312);
mindestens ein Dokument mit mehreren Seiten zur Erzeugung in dem Klientensystem in dem ausgewählten Format anzufordern (314); und
eine Teilmenge (326) der Dokumentenseite in dem ausgewählten Format zu empfangen (330).

2. Speichermedium nach Anspruch 1, wobei die Befehle zur Auswahl des zweiten Formats Befehle umfassen, um ein Bildformat oder ein portables Netzwerk Grafik-, PNG-, Format auszuwählen.

3. Speichermedium nach Anspruch 1, das ferner Befehle zur Anforderung mindestens einer weiteren Seite des Dokuments umfasst, wobei die mindestens eine weitere Seite nicht in der Teilmenge enthalten ist, und wobei das Medium ferner Befehle zum Empfang zumindest der zusätzlichen Seiten umfasst.

4. Speichermedium nach Anspruch 1, das ferner Befehle zur Anzeige der Teilmenge aus Dokumentenseiten in dem Klientensystem umfasst, und ferner Befehle zur Bereitstellung einer Zoom-Funktion lokal in dem Klientensystem ohne einen Rundlaufnachrichtenablauf zwischen dem Klientensystem und einem Server umfasst.

5. Speichermedium nach Anspruch 4, wobei die Befehle zur Bereitstellung einer Zoom-Funktion Befehle zum Anwenden von Zoom-Transformationen unter Verwendung von Browser-unterstützter Skalierung oder einer durch das Einschubmodul unterstützten Operation umfassen.

6. Speichermedium nach Anspruch 1, das ferner Befehle zum Empfang von positionsbasierten Meta-Daten, die für den Inhalt berechnet sind, umfasst.

7. Speichermedium nach Anspruch 6, das ferner Befehle zum Reagieren auf Anwenderbefehle durch Bezugnahme auf die positionsbasierten Meta-Daten umfasst.

8. Verfahren zur Bereitstellung der Erzeugung eines Dokumenteninhalts in einem Klientensystem (102) ohne Installation eines Einschubmodells für die Erzeugung des Inhalts in dem Klientensystem, wobei das Verfahren umfasst:
Empfangen (318) einer Anforderung (316) für mindestens ein ausgewähltes Dokument (134), das mehrere Seiten enthält, wobei die Anforderung eines von mindestens zwei Erzeugungsformaten, die durch das Klientensystem ermöglicht werden, spezifiziert, wobei ein erstes der Erzeugungsformate mit einem zuvor installierten Erzeugungseinschubmodell kompatibel ist, und wobei ein zweites der Erzeugungsformate zur Erzeugung des Inhalts in dem Klientensystem ohne Installation eines Einschubmodells in dem Klientensystem dient;
Formatieren (322) einer Teilmenge der Seiten in dem spezifizierten Erzeugungsformat;
Senden (324) der Teilmenge aus Seiten (326) zu dem Klientensystem für die Erzeugung;
Empfangen (416) einer zweiten Anforderung (414) für mindestens eine weitere Seite (420), die nicht in der Teilmenge aus Seiten enthalten ist und ein spezifiziertes Erzeugungsformat hat;
Formatieren (328) zumindest der einen weiteren Seite in dem spezifizierten Erzeugungsformat; und
Senden (418) der mindestens einen weiteren Seite zu dem Klientensystem für die Erzeugung.

9. Verfahren nach Anspruch 8, das ferner Erzeugen von positionsbasierten Meta-Daten für den Inhalt, der in dem Dokument enthalten ist, umfasst.

10. Verfahren nach Anspruch 9, wobei Erzeugen positionsbasierter Meta-Daten umfasst: Ordnen von Paragraphen in dem Dokument und/oder Ordnen von Tabellenelementen in dem Dokument.

11. Verfahren nach Anspruch 9, wobei das Erzeugen positionsbasierter Meta-Daten umfasst:
Betrachten eines Begrenzungsrechtecks für mindestens eine Textauflage innerhalb des Dokuments oder für mindestens einen Hyper-Link innerhalb des Dokuments.

12. Verfahren nach Anspruch 9, das ferner umfasst: Senden der positionsbasierten Meta-Daten zu dem Klientensystem.

13. Verfahren nach Anspruch 8, das ferner umfasst: Ausführen einer Zusammenstellung für mindestens eine Textauflage, die in dem Dokument auftritt.

14. Verfahren nach Anspruch 8, wobei die Anforderung eine Anforderung (806) zum Suchen nach mindestens einem Begriff (808) innerhalb des mindestens einen Dokuments (134) ist, und wobei das Verfahren ferner umfasst:
Suchen (814) nach dem Begriff in dem mindestens einen Dokument;
in Reaktion auf das Auffinden mindestens eines Auftretens des Begriffes in dem mindestens einen Dokument:
Erzeugen (816) einer Dokumentenvorschau in dem spezifizierten Erzeugungsformat, wodurch zumindest das Auftreten des Suchbegriffs in dem mindestens einen Dokument angezeigt wird;
Erzeugen von Suchergebnissen (820), die angeben, wo der Suchbegriff in dem mindestens einen Dokument auftritt; und
Senden (818) der Dokumentenvorschau und der Suchergebnisse zu dem Klientensystem.

15. Verfahren nach Anspruch 14, das ferner umfasst: Senden von positionsbasierten Meta-Daten, die für das mindestens eine Dokument berechnet sind, und von Befehlen zur Bezugnahme auf die Meta-Daten zu dem Klientensystem, wenn auf mindestens einen Anwenderbefehl, der die Dokumentenvorschau betrifft, reagiert wird.

## Revendications

1. Support lisible par ordinateur (116) ayant des instructions exécutables par ordinateur stockées sur celui-ci, lesquelles, une fois exécutées par un ordinateur, conduisent l'ordinateur à:
détecter (304) si un système client (102) possède un dispositif enfichable de rendu installé pour le rendu du contenu du document sur un système client;
en réponse à la détection du fait que le système client a le dispositif enfichable de rendu installé, sélectionner (308) un premier format compatible avec le dispositif enfichable de rendu de contenu; sinon:
en réponse à la détection de l'absence de dispositif enfichable de rendu installé sur le système client, sélectionner (312) un second format pour le rendu du contenu sur le système client sans installer de dispositif enfichable sur le système client;
demander (314) au moins un document comportant une pluralité de pages pour le rendu sur le système client dans le format choisi; et
recevoir (330) un sous-ensemble (326) des pages du document dans le format sélectionné.

2. Support de stockage selon la revendication 1, dans lequel les instructions pour sélectionner le second format incluent des instructions pour sélectionner un format d'image ou un format Graphique réseau portable, PNG.

3. Support de stockage selon la revendication 1, comprenant en outre des instructions pour demander au moins une page supplémentaire du document, dans lequel ladite au moins une page supplémentaire n'est pas incluse dans le sous-ensemble, et comprenant en outre des instructions pour recevoir au moins lesdites pages supplémentaires.

4. Support de stockage selon la revendication 1, comprenant en outre des instructions pour afficher le sous-ensemble de pages de document sur le système client, et comprenant en outre des instructions pour fournir une fonctionnalité de zoom localement sur le système client sans flux de message aller-retour entre le système client et un serveur.

5. Support de stockage selon la revendication 4, dans lequel les instructions pour fournir une fonctionnalité de zoom incluent des instructions pour appliquer des transformées de zoom à l'aide d'une mise à l'échelle prise en charge par un navigateur ou en utilisant une opération prise en charge par le dispositif enfichable.

6. Support de stockage selon la revendication 1, comprenant en outre des instructions pour recevoir des métadonnées liées à la position et calculées pour le contenu.

7. Support de stockage selon la revendication 6, comprenant en outre des instructions pour répondre aux commandes de l'utilisateur en se référant aux métadonnées liées à la position.

8. Procédé pour fournir le rendu du contenu du document sur un système client (102), sans installer de dispositif enfichable pour rendre le contenu sur le système client, le procédé comprenant:
recevoir (318) une demande (316) concernant au moins un document sélectionné (134) ayant une pluralité de pages, dans lequel la demande spécifie l'un d'au moins deux formats de rendu pris en charge par le système client, dans lequel un premier des formats de rendu est compatible avec un dispositif enfichable de rendu précédemment installé, et dans lequel un second des formats de rendu est destiné au rendu du contenu sur le système client sans installer de dispositif enfichable sur le système client;
le formatage (322) d'un sous-ensemble des pages dans le format de rendu spécifié;
l'envoi (324) du sous-ensemble des pages (326) au système client pour le rendu;
la réception (416) d'une seconde demande (414) concernant au moins une autre page (420) non incluse dans le sous-ensemble de pages et ayant un format de rendu spécifié,
le formatage (328) de ladite au moins une page supplémentaire dans le format de rendu spécifié; et
l'envoi (324) de ladite au moins une page supplémentaire au système client pour le rendu.

9. Procédé selon la revendication 8, comprenant en outre la génération de métadonnées liées à la position pour le contenu inclus dans le document.

10. Procédé selon la revendication 9, dans lequel la génération de métadonnées liées à la position inclut la mise en ordre de paragraphes dans le document et/la mise en ordre d'éléments de tableau dans le document.

11. Procédé selon la revendication 9, dans lequel la génération de métadonnées liées à la position inclut la visualisation d'un rectangle de délimitation pour au moins un passage de texte dans le document ou pour au moins un lien hypertexte dans le document.

12. Procédé selon la revendication 9, comprenant en outre l'envoi des métadonnées liées à la position au système client.

13. Procédé selon la revendication 8, comprenant en outre la réalisation d'une composition sur au moins un passage de texte dans le document.

14. Procédé selon la revendication 8, dans lequel la demande concerne une demande (806) de recherche d'au moins un terme (808) dans ledit au moins un document (134), et dans lequel le procédé est comprend en outre:
la recherche (814) du terme dans ledit au moins un document;
en réponse à la localisation d'au moins une occurrence du terme dans ledit au moins un document;
la génération (816) d'un aperçu du document dans le format de rendu spécifié,
indiquant au moins l'occurrence du terme de recherche dans ledit au moins un document;
la génération des résultats de recherche (820) indiquant l'endroit auquel le terme de recherche apparaît dans ledit au moins un document; et
l'envoi (818) de l'aperçu du document et des résultats de recherche au système client.

15. Procédé selon la revendication 14, comprenant en outre l'envoi, au système client, de métadonnées liées à la position, calculées pour ledit au moins un document et des instructions se référant aux métadonnées pour répondre à ladite au moins une commande de l'utilisateur concernant l'aperçu du document.
